(19) **Europäisches Patentamt / European Patent Office / Office européen des brevets**

(11) **EP 4 574 505 A1**

(12) **EUROPEAN PATENT APPLICATION**

(43) Date of publication:
**25.06.2025 Bulletin 2025/26**

(21) Application number: **24198974.8**

(22) Date of filing: **06.09.2024**

(51) International Patent Classification (IPC):
**B60K 35/00** (2024.01)      **B60K 35/23** (2024.01)
**B60K 35/233** (2024.01)     **B60K 35/235** (2024.01)
**B60K 35/90** (2024.01)      **G02B 27/01** (2006.01)

(52) Cooperative Patent Classification (CPC):
**B60K 35/23; B60K 35/00; B60K 35/233;**
**B60K 35/235; B60K 35/90; G02B 27/01;**
B60K 2360/166; B60K 2360/167; B60K 2360/21;
B60W 2520/10; B60W 2520/125; B60W 2540/18;
B60W 2540/225; B60W 2552/20; G02B 2027/0181;
(Cont.)

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **18.12.2023 CN 202311747859**

(71) Applicant: **Xiaomi EV Technology Co., Ltd.**
**100176 Beijing (CN)**

(72) Inventors:
• **GAO, Yi**
  **Beijing, 100176 (CN)**
• **ZHOU, Jiaxin**
  **Beijing, 100176 (CN)**
• **YUE, Qiqi**
  **Beijing, 100176 (CN)**
• **BAO, Xiehao**
  **Beijing, 100176 (CN)**

(74) Representative: **Stöckeler, Ferdinand**
**Schoppe, Zimmermann, Stöckeler**
**Zinkler, Schenk & Partner mbB**
**Patentanwälte**
**Radlkoferstrasse 2**
**81373 München (DE)**

(54) **VEHICLE CONTROL METHOD AND DEVICE, AND STORAGE MEDIUM**

(57) A vehicle control method, a vehicle control device, and a storage medium are provided. The vehicle control method includes: obtaining (S11) driving data of a vehicle at a current moment; determining (S12) a target inclination angle of a target user in the vehicle according to the driving data and a pre-calibrated angle correction parameter, where the target inclination angle represents an offset angle of a line of sight of the target user relative to a head-up display, HUD, in the vehicle, and the angle correction parameter is a correction parameter pre-calibrated according to an eye image of the target user; and controlling (S13) the vehicle to adjust a display angle of the HUD according to the target inclination angle, so that a virtual display screen of the HUD after the adjustment of the display angle is parallel to the line of sight of the target user.

| Obtaining driving data of a vehicle at a current moment | S11 |
|---|---|
| Determining a target inclination angle of a target user in the vehicle according to the driving data and a pre-calibrated angle correction parameter, where the target inclination angle represents an offset angle of a line of sight of the target user relative to a head-up display HUD in the vehicle, and the angle correction parameter is a correction parameter pre-calibrated according to an eye image of the target user | S12 |
| Controlling the vehicle to adjust a display angle of the HUD according to the target inclination angle, so that a virtual display screen of the HUD after the adjustment of the display angle is parallel to the line of sight of the target user | S13 |

Fig. 1

EP 4 574 505 A1

(52) Cooperative Patent Classification (CPC): (Cont.)
G02B 2027/0183

## Description

## FIELD

The present invention relates to the field of vehicle control, and more particularly to a vehicle control method, a vehicle control device, and a storage medium.

## BACKGROUND

A head-up display (HUD) is an apparatus that displays information within the driver's line of sight. The HUD can project the current driving information, for example, a vehicle speed, a rotating speed, an endurance mileage, a tire pressure and other interactive information, such as navigation and multimedia, at a certain distance ahead through a windshield to form a virtual display screen. In the process of driving, the driver do not need to look down at a traditional instrument panel or an on board unit (for example, an on board infotainment unit), but can get the driving information through projected images in front. Now, the HUD has been widely used in automobiles, motorcycles and other vehicles to provide drivers with the information required, and also reduce the time when their eyes leave the road, thus improving driving safety.

## SUMMARY

In order to overcome the problems in the related art, the present invention provides a vehicle control method, a vehicle control device, and a storage medium.

According to embodiments of a first aspect of the present invention, a vehicle control method is provided, and includes: obtaining driving data of a vehicle at a current moment; determining a target inclination angle of a target user in the vehicle according to the driving data and a pre-calibrated angle correction parameter, where the target inclination angle represents an offset angle of a line of sight of the target user relative to a head-up display, HUD, in the vehicle, and the angle correction parameter is a correction parameter pre-calibrated according to an eye image of the target user; and controlling the vehicle to adjust a display angle of the HUD according to the target inclination angle, so that a virtual display screen of the HUD after the adjustment of the display angle is parallel to the line of sight of the target user.

Optionally, determining the target inclination angle of the target user in the vehicle according to the driving data and the pre-calibrated angle correction parameters includes: determining a centripetal motion parameter of the vehicle according to the driving data; and determining the target inclination angle according to the centripetal motion parameter and the angle correction parameter.

Optionally, the centripetal motion parameter comprises an instantaneous centripetal acceleration, and determining the target inclination angle according to the centripetal motion parameter and the angle correction parameter includes: determining an attitude angle of the target user at the current moment according to the instantaneous centripetal acceleration and a gravity acceleration, wherein the attitude angle represents a current attitude of the target user; and determining the target inclination angle according to the attitude angle and the angle correction parameter.

Optionally, the angle correction parameter is pre-calibrated in a following manner: collecting the eye image of the target user; determining a target Euler angle of an eye of the target user in a HUD image coordinate system according to the eye image, where the target Euler angle represents a 3D posture of the eye in the HUD image coordinate system; and determining the calibrated angle correction parameter according to the target Euler angle and a pending inclination angle of the target user, wherein the pending inclination angle is an inclination angle of the target user determined according to the driving data of the vehicle obtained at a parameter calibration moment.

Optionally, determining the calibrated angle correction parameter according to the target Euler angle and the pending inclination angle of the target user includes: calculating an angle difference between the target Euler angle and the pending inclination angle; and determining the calibrated angle correction parameter according to the angle difference, where the angle difference between the inclination angle of the target user corresponding to the calibrated angle correction parameter and the target Euler angle is less than or equal to a preset angle threshold.

Optionally, the driving data includes a wheel steering angle and a vehicle speed, and determining the centripetal motion parameter of the vehicle according to the driving data includes: determining the centripetal motion parameter through a preset vehicle dynamics model according to the wheel steering angle, the vehicle speed and a wheel base of the vehicle.

Optionally, controlling the vehicle to adjust the display angle of the HUD according to the target inclination angle includes: adjusting the display angle of the HUD through a preset software adjustment strategy according to the target inclination angle.

Optionally, controlling the vehicle to adjust the display angle of the HUD according to the target inclination angle includes: adjusting the display angle of the HUD by adjusting a hardware placement angle of the HUD according to the target inclination angle, in case that the target inclination angle is less than or equal to a hardware adjustable angle threshold of the HUD; or adjusting the display angle of the HUD through a preset software adjustment strategy according to the target inclination angle, in case that the target inclination angle is greater than the hardware adjustable angle threshold.

Optionally, the method further includes: obtaining road data within a preset distance range in front of the vehicle; and obtaining the driving data of the vehicle at the current moment, in case that it is determined that there is a curve in front of the vehicle according to the road data.

Optionally, the obtaining the road data within the preset distance range in front of the vehicle includes: obtaining the road data within the preset distance range through a navigation map; and/or, obtaining a road image within the preset distance range in front of the vehicle, and performing a machine vision analysis on the road image to obtain the road data.

According to embodiments of a second aspect of the present invention, a vehicle control device is provided, and includes: an obtaining module configured to obtain driving data of a vehicle at a current moment; a determination module configured to determine a target inclination angle of a target user in the vehicle according to the driving data and a pre-calibrated angle correction parameter, where the target inclination angle represents an offset angle of a line of sight of the target user relative to a head-up display, HUD, in the vehicle, and the angle correction parameter is a correction parameter pre-calibrated according to an eye image of the target user; and a control module configured to control the vehicle to adjust a display angle of the HUD according to the target inclination angle, so that a virtual display screen of the HUD after the adjustment of the display angle is parallel to the line of sight of the target user.

Optionally, the determination module is configured to: determine a centripetal motion parameter of the vehicle according to the driving data; and to determine the target inclination angle according to the centripetal motion parameter and the angle correction parameter.

Optionally, the centripetal motion parameter includes an instantaneous centripetal acceleration, and the determination module is configured to: determine an attitude angle of the target user at the current moment according to the instantaneous centripetal acceleration and a gravity acceleration, where the attitude angle represents a current attitude of the target user; and to determine the target inclination angle according to the attitude angle and the angle correction parameter.

Optionally, the device further includes a correction parameter calibration module configured to: collect the eye image of the target user; determine a target Euler angle of an eye of the target user in a HUD image coordinate system according to the eye image, where the target Euler angle represents a 3D posture of the eye in the HUD image coordinate system; and determine the calibrated angle correction parameter according to the target Euler angle and a pending inclination angle of the target user, where the pending inclination angle is an inclination angle of the target user determined according to the driving data of the vehicle obtained at a parameter calibration moment.

According to embodiments of a third aspect of the present invention, a computer-readable storage medium is provided, on which computer program instructions are stored, which are configured to, when executed by a processor, realize the steps of the vehicle control method according to the first aspect of the present invention.

The technical solution according to the embodiments of the present invention can have the following beneficial effects: the offset angle (i.e., the target inclination angle) of the target user's line of sight relative to the HUD in the vehicle can be determined in real time according to the driving data of the vehicle and the angle correction parameter pre-calibrated based on the eye image of the target user, and then the vehicle can be controlled to adjust the display angle of the HUD according to the target inclination angle. In this way, when it is determined that the offset angle of the target user's line of sight relative to the HUD in the vehicle changes, the display angle of the HUD can be controlled to change accordingly, so that the virtual display screen of the HUD after the change of the display angle is parallel to the target user's line of sight, and thus the visual experience of the target user is improved.

It is to be understood that both the foregoing general description and the following detailed description are illustrative and explanatory only, and are not restrictive of the present invention.

## BRIEF DESCRIPTION OF THE DRAWINGS

The accompanying drawings, which are incorporated in and constitute a part of the specification, illustrate embodiments consistent with the present invention and together with the description, serve to explain the principles of the present invention.

Fig. 1 is a flow chart of a vehicle control method according to an illustrative embodiment.
Fig. 2 is a flow chart of a vehicle control method according to the embodiment shown in Fig. 1.
Fig. 3 is a flow chart of a calibration method of an angle correction parameter according to an illustrative embodiment.
Fig. 4 is a flow chart of a vehicle control method according to the embodiment shown in Fig. 1.
Fig. 5 is a flow chart of a vehicle control method according to the embodiment shown in Fig. 1.
Fig. 6 is a flow chart of a vehicle control method according to the embodiment shown in Fig. 1.
Fig. 7 is a block diagram of a vehicle control device according to an illustrative embodiment.
Fig. 8 is a block diagram of a vehicle control device according to the embodiment shown in Fig. 7.
Fig. 9 is a block diagram of a vehicle control device according to the embodiment shown in Fig. 7.
Fig. 10 is a block diagram of a vehicle according to an illustrative embodiment.

## DETAILED DESCRIPTION

Reference will now be made in detail to illustrative embodiments, examples of which are illustrated in the accompanying drawings. When the following description refers to the drawings, unless otherwise indicated, the same numbers in different drawings indicate the same or similar elements. The implementations described in the following illustrative embodiments do not represent all implementations consistent with the present invention. Rather, they are merely examples of devices and methods consistent with some aspects of the present invention as detailed in the appended claims.

It should be noted that all the actions of obtaining signals, information or data in the present invention are carried out under the premise of complying with the corresponding data protection laws and policies of the country where it is located and obtaining authorization from the corresponding device owner.

The present invention is mainly applied to a scene where a display angle of a head-up display (HUD) is controlled during driving. Generally, the display angle of a virtual display screen of the HUD is fixed after the hardware of the HUD is fixed at a preset placement angle to a vehicle. Generally, the display angle of the virtual display screen of the HUD corresponding to the preset placement angle can be parallel to the line of sight of a target user (for example, a driver), so as to ensure that the relevant instrument data is displayed to the target user right in front of the target user through the HUD. Moreover, in the related art, the display angle of the HUD is fixed, so it cannot move based on the movement of the line of sight of the driver. However, under special working conditions, such as vehicle turning, especially when driving on a large turning road, the driver's body will lean left and right due to circular motion during turning, and the angle of the driver's line of sight will also move when the body leans left and right. In this case, the display angle of the HUD is not changed and still parallel to the vehicle, which will lead to a poor visual experience of the driver.

In order to solve the above problem, the present invention provides a vehicle control method, a vehicle control device, a vehicle and a storage medium. In the following, specific embodiments of the present invention will be described in detail with reference to the accompanying drawings.

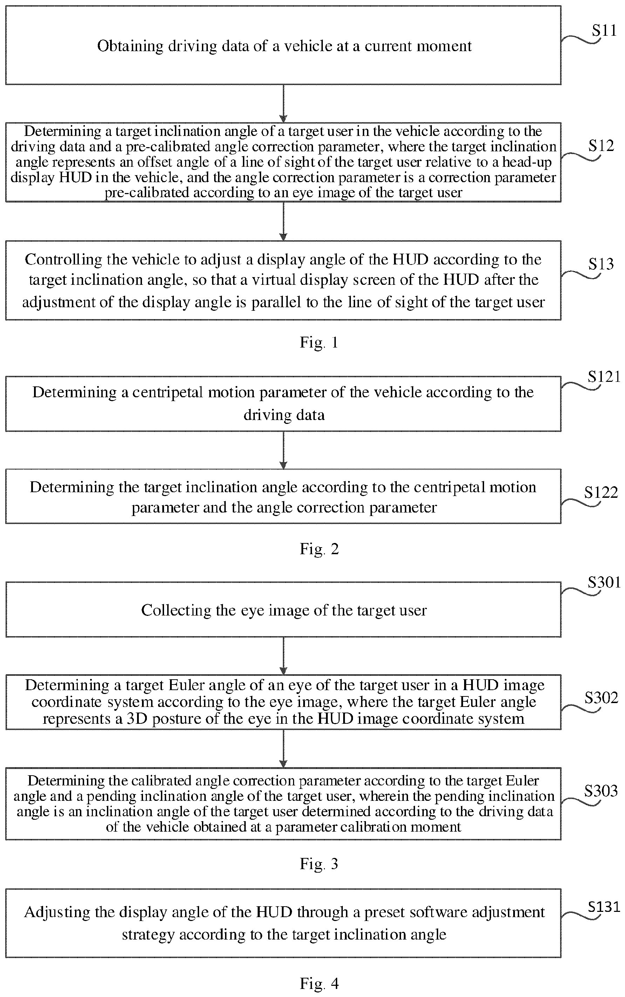

Fig. 1 is a flow chart of a vehicle control method according to an illustrative embodiment, which can be applied to a vehicle deployed with the HUD. As shown in Fig. 1, the method includes the following steps.

In step S11, driving data of the vehicle at a current time is obtained.

For example, the driving data may include data such as a wheel steering angle, a vehicle speed and a steering wheel rotating angle collected in real time.

In step S12, a target inclination angle of the target user in the vehicle is determined according to the driving data and a pre-calibrated angle correction parameter, and the target inclination angle represents an offset angle of a line of sight of the target user relative to a head-up display (HUD) in the vehicle. The angle correction parameter is a correction parameter pre-calibrated according to an eye image of the target user.

The angle correction parameter is the parameter pre-calibrated based on the eye image of the target user collected in real time during the driving of the vehicle, and can be used to correct the offset angle of the line of sight of the target user relative to the HUD determined based on the driving data of the vehicle, so as to improve the accuracy of the determined offset angle of the line of sight of the target user relative to the HUD. The target user may include the driver.

In step S13, the vehicle is controlled to adjust the display angle of the HUD according to the target inclination angle, so that the virtual display screen of the HUD after the adjustment of the display angle is parallel to the line of sight of the target user.

The display angle of the HUD may include an Euler angle representing a spatial position of the HUD.

By adopting the above method, the offset angle (i.e., the target inclination angle) of the line of sight of the target user relative to the HUD in the vehicle can be determined in real time according to the driving data of the vehicle and the angle correction parameter pre-calibrated based on the eye image of the target user, and then the vehicle can be controlled to adjust the display angle of the HUD according to the target inclination angle. In this way, when it is determined that the offset angle of the line of sight of the target user relative to the HUD in the vehicle changes, the display angle of the HUD can be controlled to change accordingly, so that the virtual display screen of the HUD after the change of the display angle is parallel to the line of sight of the target user, and the visual experience of the target user is improved.

Fig. 2 is a flow chart of a vehicle control method according to the embodiment shown in Fig. 1. As shown in Fig. 2, step S12 includes the following sub-steps.

In step S121, a centripetal motion parameter of the vehicle is determined according to the driving data.

The centripetal motion parameter may include an instantaneous centripetal acceleration.

When the vehicle turns, the driver will lean left and right due to the circular motion, and a direction of the line of sight of the driver's eyes will also change. In the process of turning, the left and right deflection (e.g. lean) of the driver is intended to counteract the centripetal acceleration generated when the vehicle turns. Therefore, an offset angle of the driver's sitting position relative to the HUD can be calculated through the force analysis of the gravity acceleration and the centripetal acceleration. Therefore, in this step, the instantaneous centripetal acceleration of the vehicle can be calculated, so as to further calculate the offset angle of the sitting position of the target user relative to the HUD.

In an embodiment, the driving data includes the wheel steering angle and the vehicle speed, so that the instantaneous centripetal acceleration can be determined by a preset vehicle dynamics model according to the wheel steering angle, the vehicle speed and a wheel base of the vehicle.

Different vehicle dynamics models can provide calculation results with different precisions.

For example, the instantaneous centripetal acceleration can be determined based on the wheel steering angle, the vehicle speed, and the wheel base of the vehicle through a preset vehicle dynamics model represented by the following formula (1):

$$a_r = v^2 \sin(\theta_l) / L \quad (1).$$

$a_r$ represents the instantaneous centripetal acceleration, $v$ represents the vehicle speed, $\theta_l$ represents the wheel steering angle and L represents the wheel base of the vehicle. In addition, the wheel steering angle $\theta_l$ can also be calculated based on the steering wheel rotating angle, and an angular correspondence between the wheel steering angle and the steering wheel rotating angle depends on the design of a steering mechanism of the steering wheel, which is not specifically limited in the present invention.

In step S122, the target inclination angle is determined according to the centripetal motion parameter and the angle correction parameter.

As described above, the centripetal motion parameter may include the instantaneous centripetal acceleration.

In a possible implementation of step S 122, an attitude angle of the target user at a current moment can be determined according to the instantaneous centripetal acceleration and the gravity acceleration, and the attitude angle represents a current attitude of the target user; and the target inclination angle is determined according to the attitude angle and the angle correction parameter.

The attitude angle of the target user at the current moment can represent an offset angle of a body attitude of the target user at the current moment relative to an initial attitude (generally referring to the body attitude of the target user when the vehicle is in a driving straight state). Since the line of sight of the target user is parallel to the HUD when the vehicle drives straight, the attitude angle of the target user at the current moment can also represent the offset angle of the target user relative to the HUD.

Because the left and right deflection of the user's body in the vehicle is intended to counteract the centripetal acceleration generated when the vehicle turns, the attitude angle of the target user at the current moment can be calculated through the force analysis of the gravity acceleration and the centripetal acceleration in an embodiment.

For example, the attitude angle of the target user at the current moment can be calculated by the following formula (2):

$$\theta_r = \arctan(g / a_r) \quad (2).$$

$\theta_r$ represents the attitude angle of the target user at the current moment, g represents the gravity acceleration and $a_r$ represents the instantaneous centripetal acceleration.

After determining the attitude angle of the target user at the current moment, the target inclination angle can be determined according to the attitude angle and the angle correction parameter.

For example, the angle correction parameter may include an angle correction coefficient, so that the target inclination angle can be calculated by the following formula (3):

$$\Delta\theta_0 = k_0\theta_r \quad (3).$$

$\Delta\theta_0$ represents the target inclination angle, $k_0$ represents the angle correction coefficient pre-calibrated, and $\theta_r$ represents the attitude angle of the target user at the current moment.

Fig. 3 is a flow chart of a calibration method of an angle correction parameter according to an illustrative embodiment. As shown in Fig. 3, the method includes the following steps.

In step S301, an eye image of the target user is collected.

In an embodiment, an image collection device deployed on the vehicle (for example, an image collection device in a Driver Monitoring System (DMS)) can be used to collect the eye image of the target user in real time.

In step S302, a target Euler angle of an eye of the target user in a HUD image coordinate system is determined according to the eye image, and the target Euler angle represents a 3D posture of the eye in the HUD image coordinate system.

In an embodiment, after image recognition of the eye image, a posture of the target user's eye in a camera coordinate system can be obtained, and then the posture of the target user's eye in the camera coordinate system can be projected into the HUD image coordinate system according to an affine transformation relation M=AN+b from a human eye posture coordinate system M to the HUD image coordinate system N (A represents an affine transformation coefficient and B represent an affine transformation constant), so as to determine the target Euler of the target user's eye in the HUD image coordinate system.

The affine transformation relation M=AN+b from the human eye posture coordinate system M to the HUD image coordinate system N can be obtained by dynamically calculating a mapping relation between the human eye and the HUD image coordinate system during driving based on prior parameters such as the prior HUD image coordinate system, camera coordinate system, vehicle body coordinate system and size of an iris of either eye.

In step S303, the calibrated angle correction parameter is determined according to the target Euler angle and an pending inclination angle of the target user, and the pending inclination angle is the inclination angle of the target user determined according to the driving data of the vehicle obtained at a parameter calibration moment.

In this step, an angle difference between the target Euler angle and the pending inclination angle can be calculated; the calibrated angle correction parameter is determined according to the angle difference, the angle difference between the inclination angle of the target user corresponding to the calibrated angle correction parameter and the target Euler angle is less than or equal to a preset angle threshold.

The pending inclination angle is the inclination angle of the target user calculated by the formulas (1)-(3) based on the driving data of the vehicle (e.g., including the vehicle speed, the wheel steering angle, etc.) obtained at the parameter calibration moment. In the process of calculating the pending inclination angle, the coefficient $k_0$ in the formula (3) can be a preset empirical value or an angle correction coefficient determined after the last parameter calibration.

In this way, the angle difference between the target Euler angle and the pending inclination angle can be calculated, and the calibrated angle correction parameter is determined according to the angle difference. The angle difference between the inclination angle of the target user corresponding to the calibrated angle correction parameter and the target Euler angle is less than or equal to the preset angle threshold.

Since the target Euler angle indicates the 3D posture of the target user's eye in the HUD image coordinate system determined according to the eye image, the target Euler angle can accurately reflect the offset angle of the target user's line of sight relative to the HUD when the vehicle is driving in a curve. That is, the closer the target Euler angle is to the pending inclination angle, the more accurate the inclination angle of the target user determined based on the driving data. Therefore, the angle correction parameter can be calibrated by calculating the angle difference between the target Euler angle and the pending inclination angle, so as to correct the offset angle of the target user's line of sight relative to the HUD, which is determined based on the driving data of the vehicle, through the calibrated angle correction parameter.

For example, the target Euler angle is denoted as $\Delta\theta_{real}$, the pending inclination angle can be calculated by the formula (3), i.e., $\Delta\theta_{pending} = K\theta_{pending}$, where k represents the angle correction coefficient to be calibrated and $\theta_{pending}$ represents the attitude angle of the target user at the parameter calibration moment, calculated by the formula (2) based on the driving data of the vehicle obtained at the parameter calibration moment. In this way, the angle difference between $\Delta\theta_{real}$ and $\Delta\theta_{pending}$ is calculated, and the angle correction coefficient k is adjusted according to the angle difference until the angle difference between the product of the adjusted K and $\Delta\theta_{pending}$ (that is, the inclination angle of the target user corresponding to the calibrated angle correction parameter) and the target Euler angle is less than or equal to the preset angle threshold. At this time, the adjusted K can be used as the calibrated angle correction coefficient. The above example is just illustrative, which is not limited by the present invention.

It should be noted that the calibration method of the angle correction parameter can be executed by a server corresponding to the vehicle and the calibrated angle correction parameter can be sent to the vehicle, when the computing resources of the vehicle are tight.

Fig. 4 is a flow chart of a vehicle control method according to the embodiment shown in Fig. 1. As shown in Fig. 4, step S13 includes the following sub-steps.

In step S 131, the display angle of the HUD is adjusted by a preset software adjustment strategy according to the target inclination angle.

In a possible implementation of the present invention, the vehicle can adjust the target inclination angle by controlling the display angle of the HUD through the execution logic of the corresponding software algorithm based on the preset software adjustment strategy, so that the virtual display screen of the HUD after the adjustment of the display angle can be parallel to the line of sight of the target user.

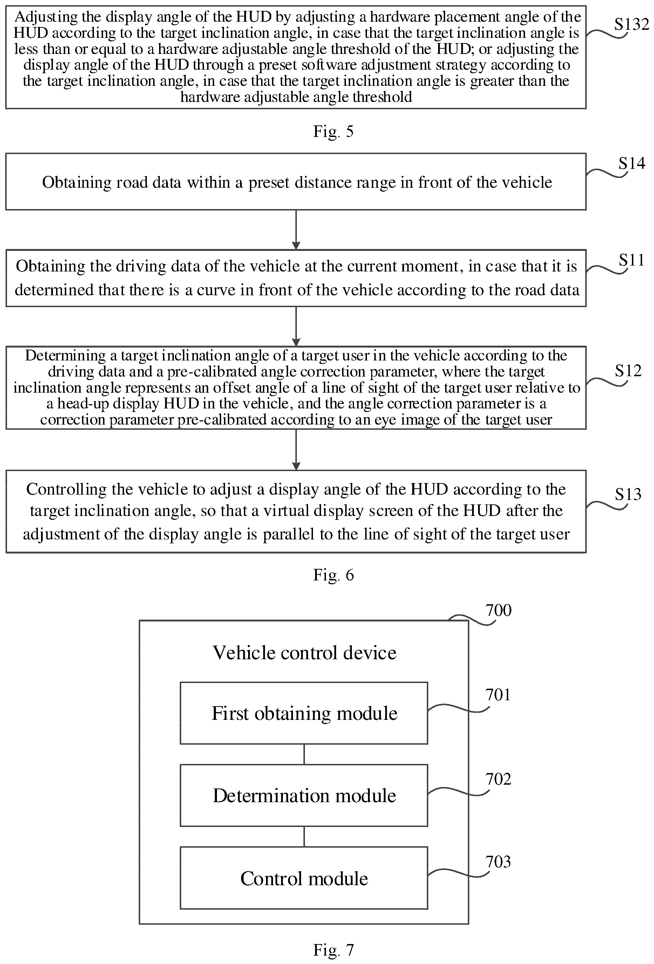

Fig. 5 is a flow chart of a vehicle control method according to the embodiment shown in Fig. 1. As shown in Fig. 5, step S13 includes the following sub-steps.

In step S132, when the target inclination angle is less than or equal to a hardware adjustable angle threshold of the HUD, the display angle of the HUD is adjusted by adjusting a hardware placement angle of the HUD according to the target inclination angle; or, in case that the target inclination angle is greater than the hardware adjustable angle threshold, the display angle of the HUD is adjusted by a preset software adjustment strategy according to the target inclination angle.

The hardware adjustable angle threshold of the HUD can represent the maximum angle range in which the hardware placement angle of the HUD can be adjusted.

In another possible implementation of the present invention, the display angle of the HUD can also be adjusted by adjusting the hardware placement angle of the HUD. However, considering that due to the limitation of the hardware space environment, the hardware adjustable angle threshold of the HUD may be smaller than the target inclination angle. Thus, in the present invention, the display angle of the HUD can be adjusted by adjusting the hardware placement angle of the HUD according to the target inclination angle, in case that the target inclination angle is smaller than or equal to the hardware adjustable angle threshold of the HUD. In case that it is determined that the target inclination angle is greater than the hardware adjustable angle threshold, the display angle of the HUD can be adjusted by the preset software adjustment strategy.

As mentioned above, in actual vehicle driving conditions, when the vehicle is driving in the curved, especially when driving on a large curved road, the driver's body will lean left and right due to the circular motion during turning, and the angle of the driver's line of sight will also move when the body leans left and right. At this time, it is necessary to control the display angle of the HUD in the vehicle to move with the movement of the driver's line of sight. Therefore, in the present invention, the road on which the vehicle is driving can be monitored in real time to determine whether there is a curve in front of the vehicle, and then the automatic adjustment of the display angle of the HUD of the vehicle can be started when it is determined that there is a curve in front of the vehicle.

Fig. 6 is a flow chart of a vehicle control method according to the embodiment shown in Fig. 1, and as shown in Fig. 6, the method further comprises the following steps.

In step S14, road data within a preset distance range in front of the vehicle is obtained.

In this step, the road data within the preset distance range can be obtained through a navigation map; and/or, a road image within the preset distance range in front of the vehicle is obtained, and a machine vision analysis is performed on the road image to obtain the road data.

In an implementation, the road image of the driving environment around the vehicle can be obtained based on an intelligent driving system of the vehicle, and then the road data can be obtained after the edge detection and the semantic segmentation of the road image through the machine vision.

In another possible implementation, a point cloud image of the road in front of the vehicle can also be obtained by a laser radar or a millimeter wave radar on the vehicle, and then the road data can be obtained after the curve detection by the point cloud clustering analysis and other methods based on the point cloud image.

In this way, in the process of executing step S11, in case that it is determined that there is the curve in front of the vehicle according to the road data, the driving data of the vehicle at the current time is obtained.

The road data can include road types (such as a through lane, a circuit, an intersection, etc.) corresponding to different position points in the preset distance range in front of the vehicle, so that it can be determined that there is the curve in front of the vehicle according to the road types corresponding to the different position points. For example, in case that it is determined that there are the circuit and/or the intersection on the driving road in front of the vehicle based on the road data, it is deemed that there is the curve in front of the vehicle.

In addition, the road data in the preset distance range obtained through the navigation map is recorded as first road data, and the road data obtained after the machine vision analysis of the road image is recorded as second road data. In the present invention, in case that it is determined that there is the curve in front of the vehicle based on the first road data and/or it is determined that there is the curve in front of the vehicle based on the second road data, it is deemed that there is the curve in front of the vehicle.

Fig. 7 is a block diagram of a vehicle control device according to an illustrative embodiment. As shown in Fig. 7, the device 700 includes: a first obtaining module 701 configured to obtain driving data of a vehicle at a current moment; a determination module 702 configured to determine a target inclination angle of a target user in the vehicle according to the driving data and a pre-calibrated angle correction parameter, where the target inclination angle represents an offset angle of a line of sight of the target user relative to a head-up display (HUD) in the vehicle, and the angle correction parameter is a correction parameter pre-calibrated according to an eye image of the target user; and a control module 703 configured to control the vehicle to adjust a display angle of the HUD according to the target inclination angle, so that a virtual display screen of the HUD after the adjustment of the display angle is parallel to the line of sight of the target user.

Optionally, the determination module 702 is configured to: determine a centripetal motion parameter of the vehicle according to the driving data; and to determine the target inclination angle according to the centripetal motion parameter and the angle correction parameter.

Optionally, the centripetal motion parameter includes an instantaneous centripetal acceleration, and the determination module 702 is configured to: determine an attitude angle of the target user at the current moment according to the instantaneous centripetal acceleration and a gravity acceleration, where the attitude angle represents a current attitude of the target user; and to determine the target inclination angle according to the attitude angle and the angle correction parameter.

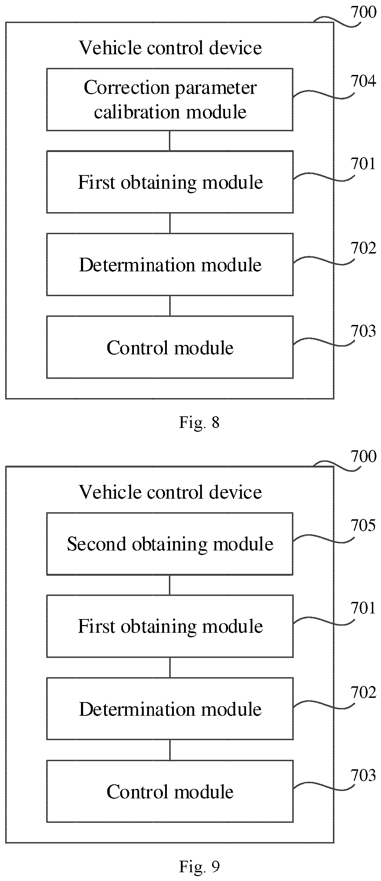

Optionally, Fig. 8 is a block diagram of a vehicle control device according to the embodiment shown in Fig. 7, and as shown in Fig. 8, the device further includes: a correction parameter calibration module 704 configured to: collect the eye image of the target user; determine a target Euler angle of an eye of the target user in a HUD image coordinate system according to the eye image, where the target Euler angle represents a 3D posture of the eye in the HUD image coordinate system; and determine the calibrated angle correction parameter according to the target Euler angle and a pending inclination angle of the target user, where the pending inclination angle is an inclination angle of the target user determined according to the driving data of the vehicle obtained at a parameter calibration moment.

Optionally, the correction parameter calibration module 704 is configured to: calculate an angle difference between the target Euler angle and the pending inclination angle; determine the calibrated angle correction parameter according to the angle difference, where the angle difference between the inclination angle of the target user corresponding to the calibrated angle correction parameter and the target Euler angle is less than or equal to a preset angle threshold.

Optionally, the driving data includes a wheel steering angle and a vehicle speed, and the determination module 702 is configured to determine the centripetal motion parameter through a preset vehicle dynamics model according to the wheel steering angle, the vehicle speed and a wheel base of the vehicle.

Optionally, the control module 703 is configured to adjust the display angle of the HUD through a preset software adjustment strategy according to the target inclination angle.

Optionally, the control module 703 is configured to: adjust the display angle of the HUD by adjusting a hardware placement angle of the HUD according to the target inclination angle in case that the target inclination angle is less than or equal to a hardware adjustable angle threshold of the HUD; or, to adjust the display angle of the HUD through the preset software adjustment strategy according to the target inclination angle in case that the target inclination angle is greater than the hardware adjustable angle threshold.

Optionally, Fig. 9 is a block diagram of a vehicle control device according to the embodiment shown in Fig. 7, and as shown in Fig. 9, the device further includes: a second obtaining module 705 configured to obtain road data within a preset distance range in front of the vehicle.

The first obtaining module 701 is configured to obtain the driving data of the vehicle at the current moment in case that it is determined that there is a curve in front of the vehicle according to the road data.

Optionally, the second obtaining module 705 is configured to: obtain the road data within the preset distance range through a navigation map; and/or, to obtain a road image within the preset distance range in front of the vehicle, and perform a machine vision analysis on the road image to obtain the road data.

With regard to the device in the above embodiments, the specific way in which each module performs operations has been described in detail in the embodiments of the method, and will not be described in detail here.

The present invention also provides a computer-readable storage medium, on which computer program instructions are stored, which, when executed by a processor, realize the steps of the vehicle control method provided by the present invention.

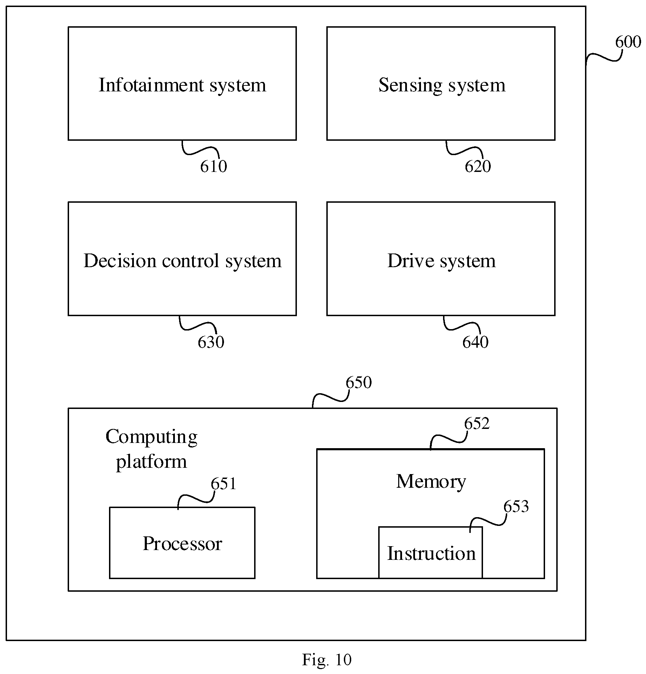

Fig. 10 is a block diagram of a vehicle according to an illustrative embodiment. For example, the vehicle 600 may be a hybrid vehicle, a non-hybrid vehicle, an electric vehicle, a fuel cell vehicle or other types of vehicles. The vehicle 600 may be an autonomous vehicle, a semi-autonomous vehicle or a non-autonomous vehicle.

Referring to Fig. 10, the vehicle 600 may include various subsystems, such as an infotainment system 610, a sensing system 620, a decision control system 630, a drive system 640, and a computing platform 650. The vehicle 600 can also include more or less subsystems, and each subsystem can include a plurality of components. In addition, each subsystem and each component of the vehicle 600 can be interconnected in a wired or wireless manner.

In some embodiments, the infotainment system 610 may include a communication system, an entertainment system, a navigation system and the like.

The sensing system 620 may include several sensors for sensing information of the environment around the vehicle 600. For example, the sensing system 620 may include a global positioning system (the global positioning system may be a GPS system, a Beidou system or other positioning systems), an inertial measurement unit (IMU), a laser radar, a millimeter-wave radar, an ultrasonic radar and a camera.

The decision control system 630 may include a computing system, a vehicle controller, a steering system, an accelerator and a braking system.

The drive system 640 may include components that provide power movements for the vehicle 600. In an embodiment, the drive system 640 may include an engine, an energy source, a transmission system and wheels. The engine can be one or a combination of an internal combustion engine, an electric motor and an air compression engine. The engine can convert the energy provided by the energy source into the mechanical energy.

Some or all functions of the vehicle 600 are controlled by the computing platform 650. The computing platform 650 may include at least one processor 651 and a memory 652, and the processor 651 may execute instructions 653 stored in the memory 652.

The processor 651 may be any conventional processor, such as a commercially available CPU. The processor may also include, for example, a Graphic Process Unit (GPU), a Field Programmable Gate Array (FPGA), a System on Chip (SOC), an application specific integrated circuit (ASIC) or a combination thereof.

The memory 652 can be realized by any type of volatile or nonvolatile memory device or their combination, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk or an optical disk.

In addition to the instructions 653, the memory 652 can also store data, such as a road map, route information, a position, a direction, a speed of the vehicle and other data. The data stored in the memory 652 can be used by the computing platform 650.

In the embodiments of the present invention, the processor 651 can execute the instructions 653 to complete all or part of the steps of the vehicle control method described above.

In another illustrative embodiment, there is also provided a computer program product, which includes a computer program executable by a programmable device, the computer program having a code portion for executing the vehicle control method described above when executed by the programmable device.

Other embodiments of the present invention will easily occur to those skilled in the art after considering the specification and practicing the present invention. The present invention is intended to cover any variations, uses or adaptations of the present invention, which follow the general principles of the present invention and include the common sense or common technical means in the field that are not disclosed in the present disclosure as long as covered by the scope of the appended claims.

**Claims**

1. A vehicle control method, comprising:

   obtaining (S11) driving data of a vehicle at a current moment;
   determining (S12) a target inclination angle of a target user in the vehicle according to the driving data and a pre-calibrated angle correction parameter, wherein the target inclination angle represents an offset angle of a line of sight of the target user relative to a head-up display, HUD, in the vehicle, and the angle correction parameter is a correction parameter pre-calibrated according to an eye image of the target user; and
   controlling (S13) the vehicle to adjust a display angle of the HUD according to the target inclination angle, so that a virtual display screen of the HUD after the adjustment of the display angle is parallel to the line of sight of the target user.

2. The method according to claim 1, wherein determining (S12) the target inclination angle of the target user in the vehicle according to the driving data and the pre-calibrated angle correction parameters comprises:

   determining (S121) a centripetal motion parameter of the vehicle according to the driving data; and
   determining (S122) the target inclination angle according to the centripetal motion parameter and the angle correction parameter.

3. The method according to claim 2, wherein the centripetal motion parameter comprises an instantaneous centripetal acceleration, and determining (S122) the target inclination angle according to the centripetal motion parameter and the angle correction parameter comprises:

   determining an attitude angle of the target user at the current moment according to the instantaneous centripetal acceleration and a gravity acceleration, wherein the attitude angle represents a current attitude of the target user; and
   determining the target inclination angle according to the attitude angle and the angle correction parameter.

4. The method according to claim 3, wherein the angle correction parameter is pre-calibrated in a following manner:

   collecting (S301) the eye image of the target user;
   determining (S302) a target Euler angle of an eye of the target user in a HUD image coordinate system according to the eye image, wherein the target Euler angle represents a 3D posture of the eye in the HUD image coordinate system; and
   determining (S303) the calibrated angle correction parameter according to the target Euler angle and a pending inclination angle of the target user, wherein the pending inclination angle is an inclination angle of the target user determined according to the driving data of the vehicle obtained at a parameter calibration moment.

5. The method according to claim 4, wherein determining (S303) the calibrated angle correction parameter according to the target Euler angle and the pending inclination angle of the target user comprises:

   calculating an angle difference between the target Euler angle and the pending inclination angle; and
   determining the calibrated angle correction parameter according to the angle difference, wherein the angle difference between the inclination angle of the target user corresponding to the calibrated angle correction parameter and the target Euler angle is less than or equal to a preset angle threshold.

6. The method according to any one of claims 2-5, wherein the driving data comprises a wheel steering angle and a vehicle speed, and determining (S121) the centripetal motion parameter of the vehicle according to the driving data comprises:
   determining the centripetal motion parameter through a preset vehicle dynamics model according to the wheel steering angle, the vehicle speed and a wheel base of the vehicle.

7. The method according to any one of claims 1-6, wherein controlling the vehicle to adjust the display angle of the HUD according to the target inclination angle comprises:
adjusting (S131) the display angle of the HUD through a preset software adjustment strategy according to the target inclination angle.

8. The method according to any one of claims 1-7, wherein controlling the vehicle to adjust the display angle of the HUD according to the target inclination angle comprises:

   adjusting (S132) the display angle of the HUD by adjusting a hardware placement angle of the HUD according to the target inclination angle, in case that the target inclination angle is less than or equal to a hardware adjustable angle threshold of the HUD; or
   adjusting (S132) the display angle of the HUD through a preset software adjustment strategy according to the target inclination angle, in case that the target inclination angle is greater than the hardware adjustable angle threshold.

9. The method according to any one of claims 1-8, further comprising:

   obtaining (S14) road data within a preset distance range in front of the vehicle; and
   obtaining (S11) the driving data of the vehicle at the current moment, in case that it is determined that there is a curve in front of the vehicle according to the road data.

10. The method according to claim 9, wherein the obtaining the road data within the preset distance range in front of the vehicle comprises:

    obtaining the road data within the preset distance range through a navigation map; and/or
    obtaining a road image within the preset distance range in front of the vehicle, and performing a machine vision analysis on the road image to obtain the road data.

11. A vehicle control device (700), comprising:

    an obtaining module (701) configured to obtain driving data of a vehicle at a current moment;
    a determination module (702) configured to determine a target inclination angle of a target user in the vehicle according to the driving data and a pre-calibrated angle correction parameter, wherein the target inclination angle represents an offset angle of a line of sight of the target user relative to a head-up display HUD in the vehicle, and the angle correction parameter is a correction parameter pre-calibrated according to an eye image of the target user; and
    a control module (703) configured to control the vehicle to adjust a display angle of the HUD according to the target inclination angle, so that a virtual display screen of the HUD after the adjustment of the display angle is parallel to the line of sight of the target user.

12. The vehicle control device (700) according to claim 11, wherein the determination module (702) is configured to:

    determine a centripetal motion parameter of the vehicle according to the driving data; and
    determine the target inclination angle according to the centripetal motion parameter and the angle correction parameter.

13. The vehicle control device (700) according to claim 12, wherein the centripetal motion parameter comprises an instantaneous centripetal acceleration, and the determination module (702) is configured to:

    determine an attitude angle of the target user at the current moment according to the instantaneous centripetal acceleration and a gravity acceleration, wherein the attitude angle represents a current attitude of the target user; and
    determine the target inclination angle according to the attitude angle and the angle correction parameter.

14. The vehicle control device (700) according to claim 13, further comprising a correction parameter calibration module (704) configured to:

    collect the eye image of the target user;
    determine a target Euler angle of an eye of the target user in a HUD image coordinate system according to the eye image, wherein the target Euler angle represents a 3D posture of the eye in the HUD image coordinate system; and
    determine the calibrated angle correction parameter according to the target Euler angle and a pending inclination angle of the target user, wherein the pending inclination angle is an inclination angle of the target user determined according to the driving data of the vehicle obtained at a parameter calibration moment.

15. A computer-readable storage medium, on which computer program instructions are stored, wherein the program instructions are configured to, when executed by a processor, realize the steps of a method according to any one of claims 1-10.

Obtaining driving data of a vehicle at a current moment ~S11

Determining a target inclination angle of a target user in the vehicle according to the driving data and a pre-calibrated angle correction parameter, where the target inclination angle represents an offset angle of a line of sight of the target user relative to a head-up display HUD in the vehicle, and the angle correction parameter is a correction parameter pre-calibrated according to an eye image of the target user ~S12

Controlling the vehicle to adjust a display angle of the HUD according to the target inclination angle, so that a virtual display screen of the HUD after the adjustment of the display angle is parallel to the line of sight of the target user ~S13

Fig. 1

Determining a centripetal motion parameter of the vehicle according to the driving data ~S121

Determining the target inclination angle according to the centripetal motion parameter and the angle correction parameter ~S122

Fig. 2

Collecting the eye image of the target user ~S301

Determining a target Euler angle of an eye of the target user in a HUD image coordinate system according to the eye image, where the target Euler angle represents a 3D posture of the eye in the HUD image coordinate system ~S302

Determining the calibrated angle correction parameter according to the target Euler angle and a pending inclination angle of the target user, wherein the pending inclination angle is an inclination angle of the target user determined according to the driving data of the vehicle obtained at a parameter calibration moment ~S303

Fig. 3

Adjusting the display angle of the HUD through a preset software adjustment strategy according to the target inclination angle ~S131

Fig. 4

Adjusting the display angle of the HUD by adjusting a hardware placement angle of the HUD according to the target inclination angle, in case that the target inclination angle is less than or equal to a hardware adjustable angle threshold of the HUD; or adjusting the display angle of the HUD through a preset software adjustment strategy according to the target inclination angle, in case that the target inclination angle is greater than the hardware adjustable angle threshold

S132

Fig. 5

Obtaining road data within a preset distance range in front of the vehicle

S14

Obtaining the driving data of the vehicle at the current moment, in case that it is determined that there is a curve in front of the vehicle according to the road data

S11

Determining a target inclination angle of a target user in the vehicle according to the driving data and a pre-calibrated angle correction parameter, where the target inclination angle represents an offset angle of a line of sight of the target user relative to a head-up display HUD in the vehicle, and the angle correction parameter is a correction parameter pre-calibrated according to an eye image of the target user

S12

Controlling the vehicle to adjust a display angle of the HUD according to the target inclination angle, so that a virtual display screen of the HUD after the adjustment of the display angle is parallel to the line of sight of the target user

S13

Fig. 6

700

Vehicle control device

First obtaining module
701

Determination module
702

Control module
703

Fig. 7

700

Vehicle control device

| Correction parameter calibration module | 704 |

| First obtaining module | 701 |

| Determination module | 702 |

| Control module | 703 |

Fig. 8

700

Vehicle control device

| Second obtaining module | 705 |

| First obtaining module | 701 |

| Determination module | 702 |

| Control module | 703 |

Fig. 9

Fig. 10

Europäisches
Patentamt

European
Patent Office

Office européen
des brevets

# EUROPEAN SEARCH REPORT

Application Number

EP 24 19 8974

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | DE 10 2019 100379 A1 (THYSSENKRUPP AG [DE]; THYSSENKRUPP PRESTA AG [LI]) 9 July 2020 (2020-07-09) * paragraphs [0001], [0022], [0023] * ----- | 1-15 | INV. B60K35/00 B60K35/23 B60K35/233 B60K35/235 |
| A | JP 2020 187294 A (DENSO CORP) 19 November 2020 (2020-11-19) * the whole document * ----- | 1-15 | B60K35/90 G02B27/01 |
| A | US 2020/292832 A1 (LIU YI [CN] ET AL) 17 September 2020 (2020-09-17) * the whole document * ----- | 1-15 | |

| | |
|---|---|
| | TECHNICAL FIELDS SEARCHED (IPC) |
| | B60K B60W G02B |

The present search report has been drawn up for all claims

| Place of search | Date of completion of the search | Examiner |
|---|---|---|
| Munich | 27 January 2025 | Erbel, Christoph |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................
& : member of the same patent family, corresponding document

EPO FORM 1503 03.82 (P04C01)

1

## ANNEX TO THE EUROPEAN SEARCH REPORT
## ON EUROPEAN PATENT APPLICATION NO.

EP 24 19 8974

This annex lists the patent family members relating to the patent documents cited in the above-mentioned European search report.
The members are as contained in the European Patent Office EDP file on
The European Patent Office is in no way liable for these particulars which are merely given for the purpose of information.

27-01-2025

| Patent document cited in search report | Publication date | Patent family member(s) | | Publication date |
|---|---|---|---|---|
| DE 102019100379 A1 | 09-07-2020 | CN | 113287174 A | 20-08-2021 |
| | | DE | 102019100379 A1 | 09-07-2020 |
| | | EP | 3909058 A1 | 17-11-2021 |
| | | US | 2022062581 A1 | 03-03-2022 |
| | | WO | 2020144173 A1 | 16-07-2020 |
| JP 2020187294 A | 19-11-2020 | NONE | | |
| US 2020292832 A1 | 17-09-2020 | CN | 109889807 A | 14-06-2019 |
| | | US | 2020292832 A1 | 17-09-2020 |

EPO FORM P0459

For more details about this annex : see Official Journal of the European Patent Office, No. 12/82